# EUROPÄISCHE PATENTSCHRIFT

(11) **EP 0 952 043 B1**
(45) Veröffentlichungstag und Bekanntmachung des Hinweises auf die Patenterteilung: **09.06.2004**
(21) Anmeldenummer: 99107350.3
(22) Anmeldetag: 21.04.1999
(51) Int. Cl.: B60R 21/16

(54) **Knieschutzeinrichtung für Fahrzeuginsassen**
Knee protecting device for vehicle occupants
Dispositif de protection des genoux pour les occupants d'un véhicule

(30) Priorität: 23.04.1998 DE 29807424 U
(43) Veröffentlichungstag der Anmeldung: 27.10.1999
(73) Patentinhaber: TRW Automotive GmbH, 73553 Alfdorf (DE)
(72) Erfinder: Schultz, Dirk, 73527 Schwäbisch Gmünd (DE)
(74) Vertreter: Kitzhofer, Thomas, Dipl.-Ing.

(56) Entgegenhaltungen:
- EP-A- 0 422 840
- DE-A- 2 109 637
- DE-A- 4 121 659
- DE-A- 19 701 709
- US-A- 5 458 366
- US-A- 5 513 877
- US-A- 5 536 043

## Beschreibung

Die Erfindung betrifft eine Knieschutzeinrichtung für Fahrzeuginsassen, mit einem Gassack mit einer Gassackwandung, der sich im aufgeblasenen Zustand vor den Knien des Fahrzeuginsassen im Rückhaltefall erstreckt, an den Knien im Rückhaltefall anliegt und diese an einer Vorverlagerung weitgehend hindern soll.

Es gibt bisher verschiedene Prinzipien von Knieschutzeinrichtungen. Zum einen sind Systeme bekannt, bei denen eine gepolsterte Platte im Rückhaltefall in Richtung der Knie des Insassen verschoben wird, um diese an einer Verlagerung zu hindern. Zum anderen gibt es Knieschutzeinrichtungen mit schlauchförmigen Gassäcken, die im Rückhaltefall aus der Armaturentafel austreten und sich vor den Knien des Insassen erstrecken, so daß die Knie unmittelbar und nicht über die Prallplatte an dem Gassack anliegen und durch den Gassack zurückgehalten werden. Bei dem zweiten System, das die vorliegende Erfindung betrifft, sind jedoch einige Nachteile vorhanden. So ist die Rückhaltewirkung dieses Systems sehr stark von der Größe der Kontaktfläche Gassack zu Insassen abhängig. Beim Eintauchen der Knie in den Gassack steigt der Gassackinnendruck. Erfolgt der Kontakt des Insassen aber über eine sehr geringe Fläche, kann nur ein geringes Gasvolumen verdrängt werden, so daß der Druckanstieg im Luftsack gering ist. Dieser Effekt wird zudem dadurch verstärkt, daß sich der Luftsack beim Eintauchen der Knie an anderen Stellen auswölbt, was zu einer Reduzierung der Volumenveränderung führt und den Druckanstieg herabsetzt. Bei einem geringen Druckanstieg sind jedoch auch nur geringere Rückhaltekräfte erzielbar. Ein weiterer Nachteil betrifft das Aufbringen der Rückhaltekraft auf den Fahrzeuginsassen. Bei dem herkömmlichen System wird ein großer Teil der Kraft nicht wie notwendig in das Knie, sondern in die Schienbeine eingeleitet, da der Insasse im Rückhaltefall über einen großen Teil der Schienbeine bis hinauf zu den Knien am Gassack anliegt. Aus biomechanischen Gründen (Verletzungsgefahr) muß die Krafteinleitung in die Schienbeine minimiert werden.

Aus der gattungsgemäβen US-A-5,513,877 ist eine kombinierte Knie- und Oberkörper-Schutzeinrichtung bekannt, mit einem großvolumigen Gassack, der die Knie und den Oberkörper zurückhalten soll. Oberhalb der Knie verläuft eine Trennwand innerhalb des Gassacks, so daß sich eine Kammer für den Oberkörper und eine Kammer für die Knie ergeben.

Die Erfindung schafft eine Knieschutzeinrichtung, die sich durch das Aufbringen einer hohen und gezielten Rückhaltekraft im Bereich der Knie auszeichnet. Dies wird bei einer Knieschutzeinrichtung gemäß Anspruch 1 erreicht. Die Mittel sind an den Abschnitten der Gassackwandung befestigt und so angeordnet, daß sie einer Gestaltänderung des Gassacks beim Eintauchen der Knie in den Gassack entgegenwirken. Die Erfindung basiert unter anderen auf der Erkenntnis, daß gerade bei Gassäcken, bei denen die Trägheitskräfte durch den sich nach vom verlagernden Fahrzeuginsassen auf einer geringen Fläche auf ihn einwirken, eine Stabilisierung von dessen Gestalt sehr wichtig ist. Die Mittel zum Stabilisieren der Gestalt des Gassacks sind beispielsweise Fangbänder im Inneren des Gassacks und/oder Trennwände zur Bildung von mehreren Kammern. Fangbänder sind dadurch gekennzeichnet, daß sie gegenüberliegende Abschnitte des Gassacks, die das Fangband verbindet, auf einen geringeren Abstand halten als ohne Fangband. Die Fangbänder sind gemäß der Erfindung so angeordnet, daß der im eingebauten und aufgeblasenen Zustand untere Teil des Gassacks, welcher bei einem Fahrer von durchschnittlicher Körpergröße im Bereich der Schienbeine liegt, ein geringeres Volumen und/oder eine geringere Tiefe als der obere Teil des Gassacks hat, der von den Knien des Insassen getroffen wird. Damit wird versucht, einen Abstand zwischen den Schienbeinen und dem Gassack zu schaffen, so daß das Schienbein keine Rückhaltekräfte mehr aufnehmen muß, sondern die zur Verfügung stehenden Rückhaltekräfte möglichst vollständig in die Knie eingeleitet werden.

Beim Vorsehen einer oder mehrerer Trennwände als Mittel zum Stabilisieren der Gestalt des Gassacks hat die Trennwand wenigstens eine Überströmöffnung. Prallt ein Knie auf eine Kammer auf, so wird die verdrängte Luft bestrebt sein, über die Überströmöffnung in die andere Kammer zu gelangen. Dies erfolgt jedoch stark zeitverzögert, da die Überströmöffnung wie eine Drossel wirkt. Damit ergibt sich insgesamt eine stabilere Struktur des Gassacks bei äußerer Krafteinwirkung. Bei Vorsehen von mehreren kleinen Kammern erfolgt zudem ein schnellerer Druckanstieg.

Vorzugsweise wirkt die Trennwand zudem auch als Fangband. Die Trennwand hat damit eine Doppelfunktion. Gemäß der bevorzugten Ausgestaltung erstreckt sich die Trennwand im eingebauten und aufgeblasenen Zustand des Gassacks über annähernd die gesamte Breite des aufgeblasenen Gassacks, ohne jedoch seitlich vollständig oder überhaupt an der Gassackwandung befestigt zu sein. Damit ergeben sich an den Seiten Überströmkanäle. Beim Entfalten des Gassacks wirken sich die Trennwände kaum nachteilig bezüglich der Aufblasgeschwindigkeit aus, da der Gassack im nichtaufgeblasenen Zustand breiter als im aufgeblasenen ist und sich große Durchströmöffnungen zwischen den Seiten der Trennwand und den seitlichen Abschnitten der Gassackwandung bilden. Diese überbreiten Öffnungen erlauben ein schnelles Überströmen des in den Gassack eintretenden Gases von einer in die andere Kammer. Vorzugsweise erstreckt sich die Trennwand quer zum Fahrzeuginsassen, d.h. in Fahrzeugquerrichtung. Darüber hinaus erstreckt sich die Trennwand ferner vorzugsweise von einem rückwärtigen Abschnitt der Gassackwandung, der nahe der Instrumententafel des Fahrzeugs ist, bis zum vorderen, dem Insassen zugewandten Abschnitt.

Um den Entfaltungsvorgang zu optimieren, ist vorzugsweise eine Flammschutzwand im Gassack angeordnet, die eine Verteilerkammer für das einströmende Gas bildet und auf die der einströmende Gasstrom trifft. Die Flammschutzwand ist am rückwärtigen Abschnitt der Gassackwandung befestigt und im aufgeblasenen Zustand vom vorderen Abschnitt der Gassackwandung beabstandet. Ferner ist sie seitlich offen, so daß das eintretende Gas den Gassack zuerst seitlich entfaltet und damit korrekt positioniert. Anschließend entfaltet sich der Gassack hauptsächlich in Richtung der Knie des Insassen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 eine Querschnittsansicht der erfindungsgemäßen Knieschutzeinrichtung im eingebauten und aufgeblasenen Zustand,
Fig. 2 eine Vorderansicht des aufgeblasenen Gassacks als Teil der Knieschutzeinrichtung nach Fig. 1, und
Fig. 3 eine vergrößerte Querschnittsansicht der Knieschutzeinrichtung nach Fig. 1.

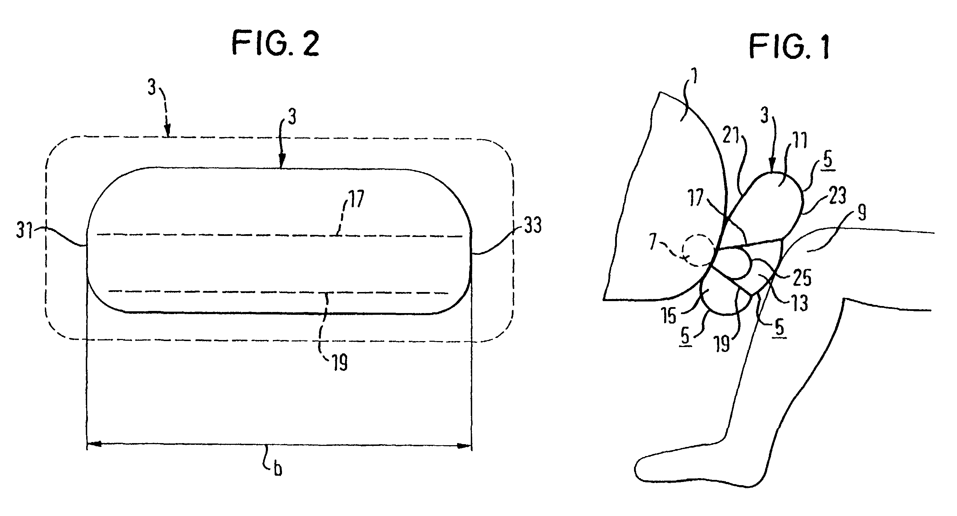

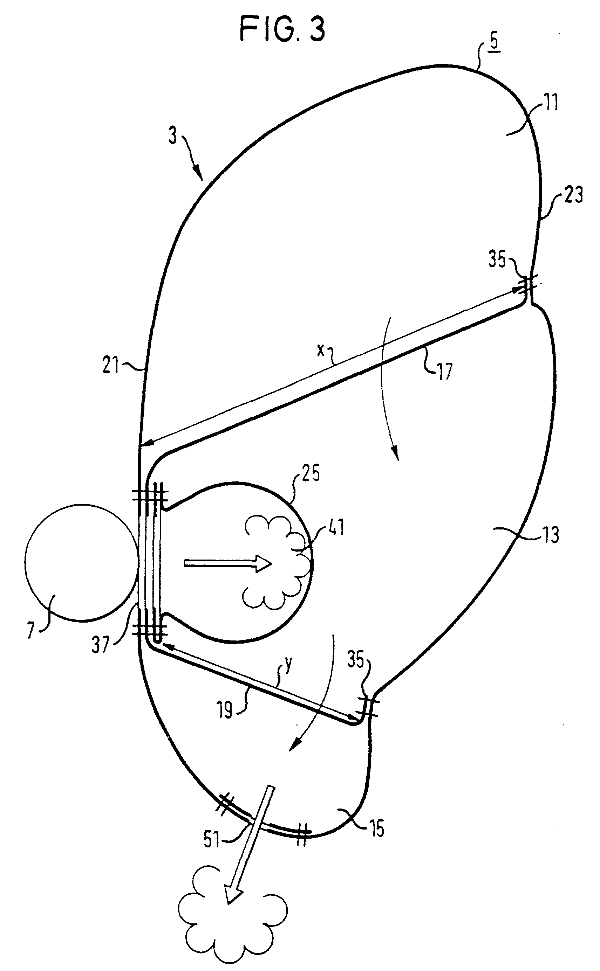

In Fig. 1 ist eine in einer Armaturentafel 1 im Fahrzeug in Kniehöhe des Fahrzeuginsassen untergebrachte Knieschutzeinrichtung gezeigt. Die Knieschutzeinrichtung umfaßt im wesentlichen einen Gassack 3 mit einer Gassackwandung 5 und einen Gasgenerator 7 zum Entfalten des Gassacks. Der Gasgenerator 7 ist hinter der Armaturentafel 1 versteckt angeordnet. Der Gassack 3 tritt beim Entfalten aus der Armaturentafel heraus und schiebt sich zwischen diese und den Knien 9 des Insassen. Der Gassack 3 hat mehrere Kammern 11, 13, 15, die durch zwei Trennwände 17 und 19 gebildet werden. Die Trennwände 17, 19 verbinden einen rückwärtigen Abschnitt 21 mit einem vorderen Abschnitt 23 der Gassackwandung 5. Der rückwärtige Abschnitt 21 ist der Armaturentafel 1 und der vordere Abschnitt 23 dem Fahrzeuginsassen zugewandt. Die Trennwände 17, 19 wirken auch als Fangbänder, denn sie sind so kurz ausgebildet, daß sie die Form des Gassacks im aufgeblasenen Zustand wesentlich mitbestimmen, indem sie den vorderen Abschnitt 23 näher an dem rückwärtigen Abschnitt 21 halten als dies bei einem entsprechenden Gassack ohne Trennwände 17, 19 der Fall wäre. In der mittleren Kammer 13 ist ferner eine Flammschutzwand 25 vorhanden, die anhand von Fig. 3 noch näher erläutert wird.

In Fig. 2 ist der Gassack 3 mit unterbrochenen Linien in ausgebreitetem, ungefalteten Zustand und mit durchgezogenen Linien in aufgeblasenem Zustand dargestellt. Der Gassack 3 ist sehr breit, so daß er alle möglichen Knie-Auftreffpunkte im Rückhaltefall abdeckt. Wie man Fig. 2 entnehmen kann, verringert sich beim Aufblasen die Breite des Gassacks 3 auf ein Maß b. Die Trennwände 17, 19 erstrecken sich fast über die gesamte Breite b. Die Trennwände 17, 19 sind nur am vorderen und am rückwärtigen Abschnitt 23, 21 angebracht, nicht jedoch an den Seiten 31, 33 der Gassackwandung 5. Damit ergeben sich schlitzartige Überströmöffnungen an beiden Seiten der Trennwände 17, 19 zwischen diesen und den Seiten 31, 33.

In Fig. 3 ist zu erkennen, daß die Trennwände 17, 19 aus einem Gewebeteil bestehen. Dieses Teil hat gegenüberliegende Ränder 35, an denen es am vorderen Abschnitt 23 der Gassackwandung 5 angenäht ist. Ein Mittelstück des Teiles ist am rückwärtigen Abschnitt 21 im Bereich der Einblasöffnung 37 des Gassacks angenäht und hat eine Ausnehmung im Bereich der Einblasöffnung 37. Das die Trennwände 17, 19 bildende Teil stellt damit eine Verstärkung des Randes der Einblasöffnung 37 dar. Am Rand der Einblasöffnung 37 ist die Flammschutzwand 25 gemeinsam mit dem Teil, das die Trennwände 17, 19 bildet, angenäht und bildet ebenfalls eine Verstärkung des Randes der Einblasöffnung 37. Die Flammschutzwand 25 hat im aufgeblasenen Zustand etwa die Form eines Zylinders, der seitlich offen ist. Durch die Flammschutzwand 25 wird eine Verteilerkammer 41 für das vom Gasgenerator 7 erzeugte Gas gebildet, welches in den Gassack 3 einströmt. Die Länge der Trennwände 17, 19 ist unterschiedlich. Während die Trennwand 17 eine relativ große Länge x hat, ist die Trennwand 19 mit der Länge y eher kurz. Damit ist auch die Tiefe des Gassacks im unteren Teil deutlich geringer als im oberen Teil. Dies hat den Vorteil, daß im unteren Teil des Gassacks ein Abstand zwischen den Schienbeinen des Insassen (vgl. Fig. 1) und dem Gassack 3 erzielt wird, so daß Kontakt zwischen Gassack und Insassen nur im Bereich der Knie auftritt. Damit wird die Rückhaltekraft hauptsächlich in die Knie eingeleitet, wo sie die größte Rückhaltewirkung für den Unterkörper- und den Oberschenkelbereich entfalten kann.

Am unteren Ende des Gassacks ist zudem eine Ausströmöffnung 51 vorgesehen, die erst dann öffnet, wenn ein gewisser Druck im Gassackinneren auftritt. Zudem oder alternativ können selbstverständlich auch stets offene Ausströmöffnungen (nicht gezeigt) vorgesehen sein.

Im folgenden wird die Funktion der Knieschutzeinrichtung im Rückhaltefall erläutert. Sobald der Gasgenerator 7 aktiviert wird, strömt über die Einblasöffnung 37 Gas in das Innere des Gassacks. Der Gassack wird sich zuerst geringfügig in Richtung Insassen entfalten, bis die Verteilerkammer 41 ausgebildet ist. Die Gasströmung trifft auf die Flammschutzwand 25 und wird, nachdem sie sich geteilt hat, seitlich umgelenkt. Der Gassack entfaltet sich dann fast ausschließlich seitlich und positioniert sich dadurch bereits zu einem sehr frühen Zeitpunkt. Das Gas strömt seitlich aus der Verteilerkammer 41 in die mittlere Kammer 13 ein. Da zu Beginn des Entfaltungsvorgangs noch ein breiter Schlitz zwischen den Trennwänden 17 und 19 sowie den Seiten 31, 33 des Gassacks besteht, erfolgt ein schnelles Überströmen des Gases auch in die anderen Kammern 11, 15. Der Gassack entfaltet sich nach oben, nach unten und in Richtung zum Insassen, bis er seine volle Größe erreicht hat.

In diesem Zustand liegen die Trennwände 17, 19 seitlich fast oder sogar vollständig an den Seiten 31, 33 an. Die Lage des Gassacks ist so gewählt, daß die Knie des Insassen auf die mittlere Kammer 13 auftreffen. Die Knie dringen in den Gassack ein und führen zu einer Verdrängung von Gas. Dies würde normalerweise ein Auswölben der Gassackwandung 25 in Bereichen führen, die nicht von den Knien berührt werden. Aufgrund der als Fangbänder wirkenden Trennwände 17, 19 wird die Gestalt des Gassacks aber im wesentlichen aufrechterhalten, so daß der Gassackinnendruck beim Auftreffen der Knie deutlich ansteigt. Das durch die Knie verdrängte Gas ist bestrebt, über die Überströmöffnungen in die anderen Kammern 11, 15 zu gelangen. Da die Überströmöffnungen aber im vollständig aufgeblasenen Zustand relativ klein sind, ergibt sich ein Strömungswiderstand, der erst überwunden werden muß, so daß das Überströmen verzögert erfolgt. Auch dadurch kann der Gassackinnendruck stark ansteigen, was eine hohe Rückhaltekraft ergibt. Das Überströmverhalten und damit der Verlauf des Druckanstiegs kann durch eine Änderung der Breite der Trennwände 17, 19 im Verhältnis zur Breite des Gassacks leicht eingestellt werden. Um Kraftspitzen abzubauen, wird die Ausströmöffnung 51 bei Erreichen eines bestimmten Wertes aufgrund des Innendrucks geöffnet, so daß Gas, wie durch einen Pfeil angedeutet, aus dem Gassack 3 ausströmen kann.

Die optimale Lage und Gestalt des Gassacks im Hinblick auf die Position der Knie und der Schienbeine des Insassen kann durch die Länge x, y der Trennwände 17, 19 und deren Befestigungsstellen an der Gassackwandung 5 eingestellt werden. Anstatt der Trennwände 17, 19 können auch mehrere schmale, nebeneinander angeordnete Fangbänder vorgesehen sein, die aber im Schnitt (Fig. 1) dieselbe Gestalt wie die Trennwände 17, 19 haben.

Die Vorteile der gezeigten Knieschutzeinrichtung sind im wesentlichen:
Schnelle und korrekte Positionierung des Gassacks beim Entfaltungsvorgang.
Verringerung der Gestaltänderung des Gassacks beim Eintauchen der Knie durch Vorsehen von Mitteln im Gassack, die der Gestaltänderung entgegenwirken (Fangband und Trennwand).
Schneller Druckanstieg und damit Erreichen einer hohen Rückhaltekraft.
Genaues Positionieren der Stellen der Einleitung der Rückhaltekraft in den Insassen.
Sehr günstige Fertigung des Gassacks durch die Kombination von Trennwänden, Fangbändern sowie der Flammschutzwand.

## Patentansprüche

1. Knieschutzeinrichtung für Fahrzeuginsassen,
mit einem Gassack (3) mit einer Gassackwandung (5),
der sich im aufgeblasenen Zustand vor den Knien des Fahrzeuginsassen erstreckt, an den Knien im Rückhaltefall anliegt und die Knie an einer Vorverlagerung weitgehend hindern soll, wobei
im Gassack (3) ein Fangband oder eine Trennwand (19) vorgesehen ist, die/das gegenüberliegende Abschnitte (21, 25) der Gassackwandung (5) verbindet und an diesen Abschnitten (21, 25) der Gassackwandung (5) befestigt ist,
**dadurch gekennzeichnet, daß**
wenigstens ein Fangband oder eine Trennwand (19) vorgesehen ist, das/die am Gassack (3) in dessen eingebauten und aufgeblasenen Zustand einen unteren, vor den Schienbeinen eines Insassen von durchschnittlicher Größe liegenden und einen oberen, vor den Knien liegenden Teil (15 bzw. 13) definiert, wobei der untere Teil des Gassacks (3) ein geringeres Volumen und/oder eine geringere Tiefe als der obere Teil hat und wobei das Fangband oder die Trennwand (19) einer Gestaltänderung des Gassacks (3) beim Eintauchen der Knie entgegenwirkt.

2. Knieschutzeinrichtung nach Anspruch 1, **gekennzeichnet durch** einen Gasgenerator zum Aufblasen des Gassacks (3).

3. Knieschutzeinrichtung nach einem der vorstehenden Ansprüche, **dadurch gekennzeichnet, daß** die wenigstens eine im Gassack (3) vorgesehene Trennwand (17, 19) gegenüberliegende Abschnitte (21, 23) der Gassackwandung (5) miteinander verbindet und das Gassackinncre in Kammern (11, 13, 15) unterteilt, wobei die Trennwand (17, 19) wenigstens eine Überströmöffnung aufweist, welche eine Strömungsverbindung zwischen den Kammern (11, 13, 15) schafft.

4. Knieschutzeinrichtung nach Anspruch 3, **dadurch gekennzeichnet, daß** die Trennwand (17, 19) ein breites Fangband bildet.

5. Knieschutzeinrichtung nach Anspruch 3 oder 4, **dadurch gekennzeichnet, daß** sich die Trennwand (17, 19) im eingebauten und aufgeblasenen Zustand des Gassacks (3) über annähernd die gesamte Breite (b) des aufgeblasenen Gassacks (3) erstreckt, seitlich jedoch nicht oder nicht über die gesamte Tiefe an der Gassackwandung (5) befestigt ist.

6. Knieschutzeinrichtung nach einem der Ansprüche 3 bis 5, **dadurch gekennzeichnet, daß** die Gassackwandung (5) einen rückwärtigen Abschnitt (21) und einen diesem gegenüberliegenden und den Knien des Insassen zugewandten vorderen Abschnitt (25) hat und daß sich die Trennwand (17, 19) vom rückwärtigen Abschnitt (21) zum vorderen Abschnitt (25) erstreckt.

7. Knieschutzeinrichtung nach Anspruch 6, **dadurch gekennzeichnet, daß** der Gassack (3) eine Einblasöffnung (37) am rückwärtigen Abschnitt (21) der Gassackwandung (5) hat, daß zwei aus einem Teil gebildeten Trennwände (17, 19) vorgesehen sind, die jeweils den rückwärtigen und den vorderen Abschnitt (21, 25) miteinander verbinden, wobei das die Trennwände bildende Teil gegenüberliegende Ränder (35) und ein . Mittelstück hat und mit den Rändern (35) an dem vorderen Abschnitt (25) und mit dem Mittelstück am rückwärtigen Abschnitt (21) der Gassackwandung befestigt ist.

8. Knieschutzeinrichtung nach Anspruch 7, **dadurch gekennzeichnet, daß** das Mittelstück im Bereich der Einblasöffnung (37) an der Gassackwandung (5) befestigt ist und eine Verstärkung des die Einblasöffnung (37) umgebenden Randes ist.

9. Knieschutzeinrichtung nach einem der vorstehenden Ansprüche, **dadurch gekennzeichnet, daß** der Gassack (3) eine Einblasöffnung (37) in seiner Wandung (5) hat und eine Flammschutzwand (25) im Gassack (3) angebracht ist, die eine Verteilerkammer (41) für einströmendes Gas bildet, wobei das einströmende Gas unmittelbar auf die Flammschutzwand (25) trifft.

10. Knieschutzeinrichtung nach Anspruch 9, **dadurch gekennzeichnet, daß** die Flammschutzwand (25) am rückwärtigen Abschnitt (21) der Gassackwandung (5) ober- und unterhalb der Einblasöffnung (37) befestigt und im aufgeblasenen Zustand des Gassacks (3) vom vorderen Abschnitt (25) beabstandet und seitlich offen ist.

## Claims

1. A knee protection device for vehicle occupants,
comprising a gas bag (3) which has a gas bag wall (5)
and, in the inflated state, extends in front of the knees of the vehicle occupant, lies against the knees in a case of restraint and is intended to largely prevent the knees from moving forward,
the gas bag (3) having provided therein a limiting strap or a dividing wall (19) which connects opposing sections (21, 25) of the gas bag wall (5) and is fixed to these sections (21, 25) of the gas bag wall (5),
**characterized in that**
at least one limiting strap or one dividing wall (19) is provided which, in the installed and inflated state of the gas bag (3), defines thereon a lower part (15) located in front of the shins of an occupant of average height and an upper part (13) located in front of the knees, the lower part of the gas bag (3) having a smaller volume and/or a smaller depth than the upper part, and the limiting strap or the dividing wall (19) counteracting a change of shape of the gas bag (3) when the knees plunge in.

2. The knee protection device according to Claim 1, **characterized by** a gas generator for inflating the gas bag (3).

3. The knee protection device according to either of the preceding claims, **characterized in that** the at least one dividing wall (17, 19) provided in the gas bag (3) connects opposing sections (21, 23) of the gas bag wall (5) with each other and divides the interior of the gas bag into chambers (11, 13, 15), the dividing wall (17, 19) having at least one overflow opening which provides a flow connection between the chambers (11, 13, 15).

4. The knee protection device according to Claim 3, **characterized in that** the dividing wall (17, 19) forms a wide limiting strap.

5. The knee protection device according to Claim 3 or 4, **characterized in that** the dividing wall (17, 19), in the installed and inflated state of the gas bag (3), extends over approximately the entire width (b) of the inflated gas bag (3), but is laterally not secured to or not secured over the entire depth to the gas bag wall (5).

6. The knee protection device according to any of Claims 3 to 5, **characterized in that** the gas bag wall (5) has a rear section (21) and a front section (25) lying opposite thereto and facing the knees of the occupant, and that the dividing wall (17, 19) extends from the rear section (21) to the front section (25).

7. The knee protection device according to Claim 6, **characterized in that** the gas bag (3) has an inflation opening (37) at the rear section (21) of the gas bag wall (5), that two dividing walls (17, 19) formed from one part are provided, which each connect the rear and the front section (21, 25) with each other, the part constituting the dividing walls having opposing edges (35) and a central piece and being secured by the edges (35) to the front section (25) and by the central piece to the rear section (21) of the gas bag wall.

8. The knee protection device according to Claim 7, **characterized in that** the central piece is secured to the gas bag wall (5) in the region of the inflation opening (37) and defines a reinforcement of the rim surrounding the inflation opening (37).

9. The knee protection device according to any of the preceding claims, **characterized in that** the gas bag (3) has an inflation opening (37) in its wall (5), and that a flame protection wall (25) is arranged in the gas bag (3), which constitutes a distribution chamber (41) for inflowing gas, the inflowing gas striking directly onto the flame protection wall (25).

10. The knee protection device according to Claim 9, **characterized in that** the flame protection wall (25) is fastened to the rear section (21) of the gas bag wall (5) above and below the inflation opening (37) and is spaced apart from the front section (25) and is laterally open in the inflated state of the gas bag (3).

## Revendications

1. Dispositif de protection des genoux pour occupants de véhicule,
comprenant un coussin à gaz (3) avec une paroi de coussin à gaz (5),
lequel s'étend, à l'état gonflé, devant les genoux de l'occupant du véhicule, repose sur les genoux en cas de retenue et doit largement empêcher les genoux de se déplacer vers l'avant,
une bande de garde ou une cloison de séparation (19) étant prévue dans le coussin à gaz (3), laquelle relie des portions (21, 25) opposées de la paroi de coussin à gaz (5) et est fixée sur ces portions (21, 25) de la paroi de coussin à gaz,
**caractérisé en ce qu'**il est prévu au moins une bande de garde ou une cloison de séparation (19) qui définit dans le coussin à gaz (3) à son état de montage et de gonflage, une partie inférieure (15) située devant les tibias d'un occupant de taille moyenne et une partie supérieure (13) située devant les genoux, la partie inférieure du coussin à gaz (3) ayant un volume plus faible et/ou une profondeur plus faible que la partie supérieure et la bande de garde ou la cloison de séparation (19) réagissant à un changement de forme du coussin à gaz (3) lorsque le genoux plonge dans celui-ci.

2. Dispositif de protection des genoux selon la revendication 1, **caractérisé par** un générateur de gaz pour gonfler le coussin à gaz (3).

3. Dispositif de protection des genoux selon l'une des revendications précédentes, **caractérisée en ce que** ladite au moins une cloison de séparation (17, 19) prévue dans le coussin à gaz (3) relie l'une à l'autre ces portions (21, 23) opposées de la paroi de coussin à gaz (5) et divise l'intérieur du coussin à gaz en chambres (11, 13, 15), la cloison de séparation (17, 19) présentant au moins un orifice de trop-plein qui crée une liaison d'écoulement entre les chambres (11, 13, 15).

4. Dispositif de protection des genoux selon la revendication 3, **caractérisé en ce que** la cloison de séparation (17, 19) forme une bande de garde large.

5. Dispositif de protection des genoux selon la revendication 3 ou 4, **caractérisé en ce que**, à l'état de montage et de gonflage du coussin à gaz (3), la cloison de séparation (17, 19) s'étend sur approximativement toute la largeur (b) du coussin à gaz (3) gonflé, mais n'est toutefois pas fixée latéralement sur la paroi de coussin à gaz (5) ou pas sur toute la profondeur.

6. Dispositif de protection des genoux selon l'une des revendications 3 à 5, **caractérisé en ce que** la paroi de coussin à gaz (5) a une portion postérieure (21) et une portion antérieure (25) opposée à celle-ci et tournée vers les genoux de l'occupant, et **en ce que** la paroi de séparation (17, 19) s'étend depuis la portion postérieure (21) jusqu'à la portion antérieure (25).

7. Dispositif de protection des genoux selon la revendication 6, **caractérisé en ce que** le coussin à gaz (3) a un orifice d'insufflation (37) sur la portion postérieure (21) de la paroi de coussin à gaz (5), **en ce qu'**il est prévu deux cloisons de séparation (17, 19) formées d'un seul tenant, qui relient chacune l'une à l'autre la portion postérieure (21) et la portion antérieure (25), la partie formant les cloisons de séparation ayant des bords (35) opposés et une pièce médiane, et étant fixée avec les bords (35) sur la portion antérieure (25) et avec la pièce médiane sur la portion postérieure (21).

8. Dispositif de protection des genoux selon la revendication 7, **caractérisé en ce que** la pièce médiane est fixée dans la zone de l'orifice d'insufflation (37) sur la paroi de coussin à gaz (5) et constitue un renforcement du bord entourant l'orifice d'insufflation (37).

9. Dispositif de protection des genoux selon l'une des revendications précédentes, **caractérisé en ce que** le coussin à gaz (3) a un orifice d'insufflation dans sa paroi (5) et une paroi pare-flammes (25) est montée dans le coussin à gaz (3), celle-ci constituant une chambre de distribution (41) pour du gaz affluent, le gaz affluent étant incident directement sur la paroi pare-flammes (25).

10. Dispositif de protection des genoux selon la revendication 9, **caractérisé en ce que** la paroi pare-flammes (25) est fixée sur la portion (21) postérieure de la paroi de coussin à gaz (5) au-dessus et au-dessous de l'orifice d'insufflation (37) et, à l'état de gonflage du coussin à gaz (3), elle est à distance de la portion antérieure (25) et ouverte latéralement.
